(19) Europäisches Patentamt
European Patent Office
Office européen des brevets

(11) **EP 1 656 731 B1**

(12) **EUROPÄISCHE PATENTSCHRIFT**

(45) Veröffentlichungstag und Bekanntmachung des Hinweises auf die Patenterteilung:
**25.05.2016 Patentblatt 2016/21**

(21) Anmeldenummer: **04738666.9**

(22) Anmeldetag: **11.06.2004**

(51) Int Cl.:
*H02P 5/68* (2006.01)    *H02P 7/29* (2016.01)

(86) Internationale Anmeldenummer:
**PCT/DE2004/001214**

(87) Internationale Veröffentlichungsnummer:
**WO 2005/015729 (17.02.2005 Gazette 2005/07)**

(54) **VERFAHREN UND ANORDNUNG ZUM BETREIBEN VON WENIGSTENS ZWEI ELEKTROMOTOREN**

METHOD AND DEVICE FOR OPERATING AT LEAST TWO ELECTRIC MOTORS

PROCEDE ET DISPOSITIF POUR FAIRE FONCTIONNER AU MOINS DEUX MOTEURS ELECTRIQUES

(84) Benannte Vertragsstaaten:
**DE ES FR SE**

(30) Priorität: **12.08.2003 DE 10336963**

(43) Veröffentlichungstag der Anmeldung:
**17.05.2006 Patentblatt 2006/20**

(73) Patentinhaber: **ROBERT BOSCH GMBH**
**70442 Stuttgart (DE)**

(72) Erfinder:
• **KOCH, Stefan**
**77876 Kappelrodeck (DE)**

• **KAHLES, Patric**
**77815 Buehl (DE)**
• **KOERNER, Michael**
**77815 Buehl-Altschweier (DE)**
• **CUMMAUDO, Chris**
**3871 Mirboo North (AU)**

(56) Entgegenhaltungen:
**EP-A- 0 693 822    US-A1- 2003 094 913**

• **PATENT ABSTRACTS OF JAPAN Bd. 1998, Nr. 05, 30. April 1998 (1998-04-30) -& JP 10 014286 A (DENSO CORP), 16. Januar 1998 (1998-01-16)**

## Beschreibung

Die Erfindung betrifft ein Verfahren zum Betreiben von zwei Elektromotoren, die mittels einer gemeinsamen Steuerschaltung über jeweils eine Endstufe mit einem pulsweitenmodulierten Signal beaufschlagt werden.

Stand der Technik

Elektrische Gleichstrommotoren können zur Drehzahlregelung mit einem pulsweitenmodulierten Signal angesteuert werden. Werden mehrere Elektromotoren parallel betrieben und über eine gemeinsame Steuerschaltung angesteuert, so können sich je nach den eingestellten Tastverhältnissen Nachteile beziehungsweise Probleme bei der Ansteuerung ergeben. Es gibt einen Bereich, der abhängig vom Phasenversatz der Ansteuersignale ist, in dem es zu Überschneidungen des Abschaltvorganges des ersten Motors und dem Einschaltvorgang des zweiten Motors kommt.

Bei einem Phasenversatz der pulsweitenmodulierten Signale von 180 Grad liegt dieser Bereich bei einem Tastverhältnis von jeweils 50 % bzw. von jeweils 100 %. Der Bereich von 100 % ist hierbei nicht relevant, da nicht mehr geschaltet wird. Bei einer Ansteuerung mit einem Tastverhältnis von jeweils 50 % fließt ein maximaler Strom im Freilaufkreis innerhalb kurzer Zeitperioden. Diese Stromspitzen, sog. Spikes, können sich negativ auswirken, beispielsweise hinsichtlich der Einhaltung von EMV-Vorschriften oder hinsichtlich der Belas-tung von elektrischen und/oder elektronischen Bauteilen.

Um diese Probleme zu vermeiden, ist normalerweise eine entsprechend großzügigere Dimensionierung der Bauelemente des Freilaufkreises notwendig.

Aus der US 2003/0094913 A1, der EP 0 693 822 A1 sowie der JP 10 014286 A sind jeweils Verfahren zum Betreiben von zwei oder mehr Elektromotoren nach dem Oberbegriff des Anspruchs 1 bekannt. Dabei werden die Motoren von einer gemeinsamen Steuerschaltung über jeweils eine Endstufe mit pulsweitenmodulierten Signalen beaufschlagt, wobei die Signale in jeweiligem zeitlichen Versatz zueinander erzeugt werden und.beim Auftreten einer Schaltflanke eines Signals für einen der Elektromotoren das jeweils andere Signal für den jeweils anderen Elektromotor entweder einen "Low"- oder einen "High"-Wert aufweist.

Vorteile der Erfindung

Gegenüber dem Stand der Technik weist das erfindungsgemäße Verfahren zum Betreiben von zwei Gleichstrommotoren den Vorteil auf, dass durch Vermeidung der Überlappung von Schaltflanken zweier pulsweitenmodulierter Signale unzulässig hohe Stromspitzen, sogenannte Spikes vermieden werden können. Dazu wird bei einem Soll-Tastverhältnis von 50 % ein Tastverhältnis von jeweils weniger als 50 % beziehungsweise mehr als 50% für die beiden Motoren eingestellt. Bei Nutzung einer optimalen Endstufenansteuerung können somit die hohen Stromspitzen in Steuergerät weitgehend vermieden werden. Trotzdem kann eine gesamte Ansteuerkennlinie genutzt werden, das heißt der kritischer Bereich eines Tastverhältnisses um 50 % muss nicht ausgeblendet werden und steht für die Ansteuerung der Motoren voll zur Verfügung. Mittels dem erfindungsgemäßen Ansteuerverfahren können die Bauelemente des Freilaufkreises kleiner dimensioniert werden, da Belastungsspitzen reduziert werden. Die Freilaufbauelemente Freilaufdiode, Drossel und Kondensator bzw. Elektrolytkondensator müssen nicht mehr auf den Spezialfall der Überlappung der Schaltflanken hin ausgelegt werden.

Vorzugsweise können die zeitlichen bzw. prozentualen Abweichungen vom Soll-Tastverhältnis ungefähr einer zeitlichen Länge einer Schaltflanke eines Signals entsprechen. Dies stellt jedoch nur ein Minimum dar. Selbstverständlich kann es zweckmäßig sein, die zeitlichen bzw. prozentualen Abweichungen vom Soll-Tastverhältnis von ca. 50 % größer als eine zeitliche Dauer einer Schaltflanke zu wählen. Da die pulsweitenmodulierten Signale keine echten Rechtecksignale sind, sondern eine endliche Zeit zur Erreichung der Soll-Spannung benötigen, entstehen zeitlich sehr kurze Schaltflanken, die sich bei dem erfin-dungsgemäßen Verfahren nicht überlappen.

Eine weitere Ausgestaltung des Verfahrens sieht vor, dass beide Elektromotoren zyklisch mit den Signalen mit jeweils unterschiedlichen Tastverhältnissen beaufschlagt werden. Die zyklische Umschaltung kann nach jeweils einer vorgegebenen Zeit beziehungsweise nach einer vorgegebenen Impulszahl erfolgen. Eine Periode für die zyklische Umschaltung zwischen dem längeren Signal und dem kürzeren Signal hängt von einer Systemzeitkonstante beziehungsweise von den Motorzeitkonstanten ab. Typische Werte für einen Schaltzyklus können beispielsweise in einem Bereich zwischen 1 und 20 Millisekunden liegen.

Die zwei Elektromotoren können insbesondere Gebläse- beziehungsweise Lüftermotoren eines Kraftfahrzeuges beziehungsweise dessen Klimatisierungseinrichtung sein. Grundsätzlich kann das erfindungsgemäße Verfahren für alle Gruppierungen von wenigstens zwei Motoren eingesetzt werden, bei denen die Motoren mittels pulsweitenmodulierter Signale in ihrer Drehzahl geregelt werden.

Weitere vorteilhafte Ausgestaltungen der Erfindung ergeben sich aus den übrigen, in den abhängigen Ansprüchen genannten Merkmalen.

Eine weitere Ausgestaltung des Verfahrens sieht vor, dass beide Elektromotoren zyklisch mit den Signalen mit jeweils unterschiedlichen Tastverhältnissen beaufschlagt werden. Die zyklische Umschaltung kann nach jeweils einer vorgegebenen Zeit beziehungsweise nach einer vorgegebenen Impulszahl erfolgen. Eine Periode für die zyklische Umschaltung zwischen dem längeren Signal und dem kürzeren Signal hängt von einer Systemzeitkonstante beziehungsweise von den Motorzeitkonstanten ab. Typische Werte für einen Schaltzyklus können beispielsweise in einem Bereich zwischen 1 und 20 Millisekunden liegen.

Eine Anordnung zum Betreiben zweier Elektromotoren, mit einer Steuerschaltung mit wenigstens zwei Endstufen zur Erzeugung jeweils eines pulsweitenmodulierten Signals für jeden der Elektromotoren, wobei die Signale jeweils einen zeitlichen Versatz zueinander aufweisen, sieht einen zeitlichen Versatz der Schaltflanken der wenigstens zwei Signale vor. Die Anordnung kann insbesondere mit einem der zuvor beschriebenen Verfahrensmodi betrieben werden.

Die wenigstens zwei Elektromotoren können insbesondere Gebläsebeziehungsweise Lüftermotoren eines Kraftfahrzeuges beziehungsweise dessen Klimatisierungseinrichtung sein. Grundsätzlich kann das erfindungsgemäße Verfahren für alle Gruppierungen von wenigstens zwei Motoren eingesetzt werden, bei denen die Motoren mittels pulsweitenmodulierter Signale in ihrer Drehzahl geregelt werden.

Weitere vorteilhafte Ausgestaltungen der Erfindung ergeben sich aus den übrigen, in den abhängigen Ansprüchen genannten Merkmalen.

Zeichnungen

Die Erfindung wird .nachfolgend in bevorzugten Ausführungsbeispielen anhand der zugehörigen Zeichnungen näher erläutert. Dabei zeigt die:

Figur 1              ein Prinzipschaltbild einer erfindungsgemäßen Anordnung in einer einfachsten Ausführungsform und die

Figuren 2 bis 4      verschiedene Diagramme zur Verdeutlichung verschiedener Steuerungsstrategien der erfindungsgemäßen Anordnung.

Beschreibung der Ausführungsbeispiele

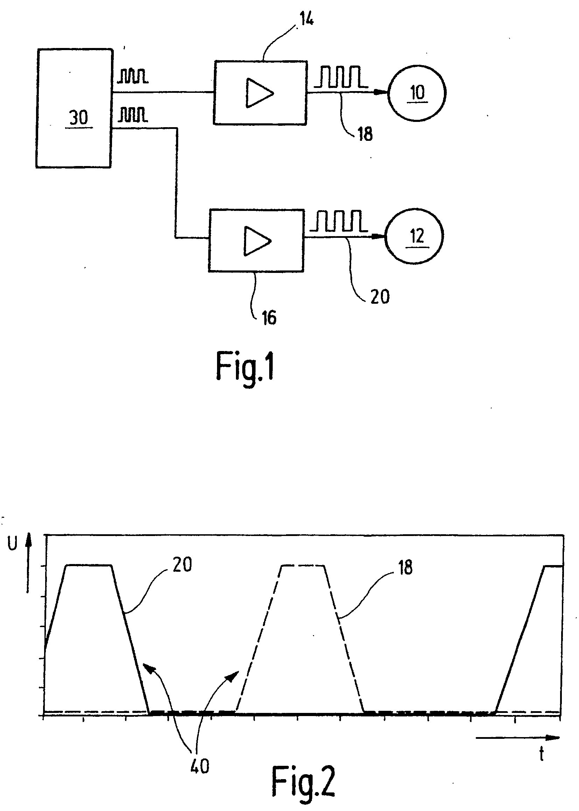

Figur 1 zeigt eine schematische Darstellung einer erfindungsgemäßen Anordnung zur Ansteuerung zweier Elektromotoren 10 und 12 die jeweils eine Endstufe 14 beziehungsweise 16 sowie ein zentrales Schaltgerät 30 aufweisen, das Teil einer Gebläse- beziehungsweise Lüftersteuerung eines Kraftfahrzeuges (nicht dargestellt) beziehungsweise dessen Klimatisierungseinrichtung sein können. Bei einer Ansteuerung der insbesondere als Gleichstrommotoren ausgebildeten Elektromotoren 10 und 12 mittels pulsweitenmodulierter Signale 18 und 20 kann bei einer Pulsweite mit einem Tastverhältnis von circa 50 % eine gleichphasige (Phasenversatz: 0°) oder eine alternierende Ansteuerung (Phasenversatz: 180°) erfolgen. Bei einer alternierenden Ansteuerung sind die Phasen der beiden pulsweitenmodulierten Signale 18, 20 jeweils so gegeneinander versetzt, dass sich die Schaltflanken der beiden Signale überlappen können.

Zwar bietet der synchrone Betrieb der beiden Elektromotoren 10 und 12 Vorteile für die Dimensionierung der Ansteuerschaltung, doch können die Bereiche mit sich überschneidenden Schaltflanken der pulsweitenmodulierten Ansteuersignale 18 und 20 Probleme bereiten.

Das Diagramm der Figur 2 zeigt beispielhaft ein kleines Tastverhältnis von deutlich weniger als 50 % für beide Motoren. Die pulsweitenmodulierten Signale 18 und 20 werden hierbei in näherungsweise rechteckförmiger Spannung zwischen einer Minimalspannung ("Low" beziehungsweise Null) und einer Maximalspannung ("High") angesteuert. Hierbei findet keine Überlappung statt, da bei einem derartigen kleinen Tastverhältnis von bspw. weniger als 20 % eine ansteigende Flanke einer Endstufe immer auf ein Null-Signal bzw. ein "Low"-Signal der jeweils anderen Endstufe trifft. Die Schaltflanken 40 des mit ausgezogener Linie gezeichneten pulsweitenmodulierten Signals 18 des ersten Elektromotors 10 treffen somit niemals gleichzeitig auf Schaltflanken 40 des mit unterbrochener Linie gezeichneten pulsweitenmodulierten Signals 20 des zweiten Elektromotors 12, so dass die genannten negativen Effekte der sog. Spikes nicht auftreten können.

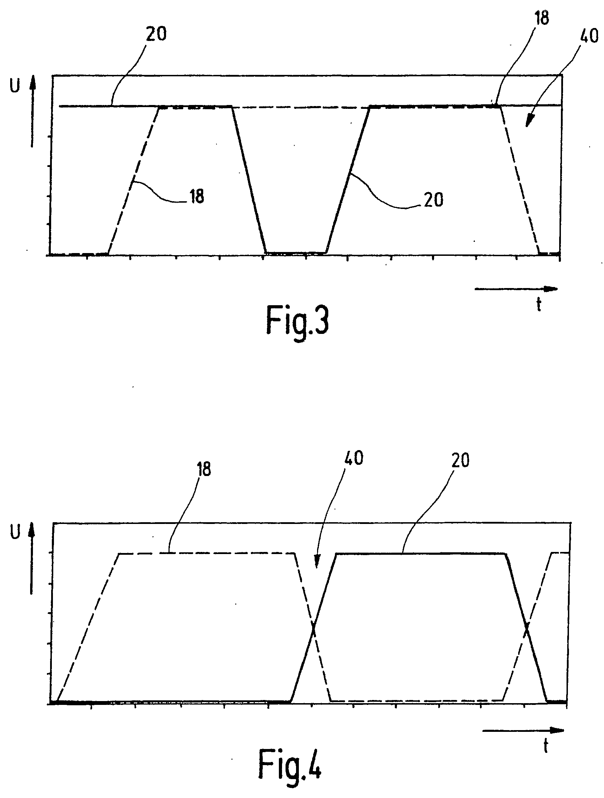

Das Diagramm der Figur 3 zeigt ein größeres Tastverhältnis von deutlich mehr als 50 %, bei dem sich die Schaltflanken 40 der beiden Signals 18 und 20 nicht überlappen. Hierbei treten die genannten negativen Effekte nicht auf.

Das Diagramm der Figur 4 zeigt einen kritischen Bereich bei einem Tastverhältnis von circa 50 %, bei dem sich die Schaltflanken 40 der von den beiden Endstufen 14 und 16 gelieferten pulsweitenmodulierten Signale 18 bzw. 20 jeweils überlappen. Hierbei entsteht die Gefahr von Stromspitzen, die aus Gründen der EMV-Verträglichkeit sowie aus Gründen der Anlagensicherheit vermieden werden sollten.

Der kritische Bereich der kurzen Stromüberlappungen bzw. kurzen Stromlücken wird typischerweise bei einem Ausgangstastverhältnis von ungefähr 50 % erreicht. Je nach Auslegung der Schaltungshardware kann dieser Bereich typischerweise zwischen 45 und 55 % variieren, da die Ansteuersignale etwas verschliffen sind. Ziel ist es, die beiden Motoren 10, 12 mit einem konstanten Tastverhältnis anzusteuern. Kurz vor dem Erreichen des kritischen Bereichs (z.B. bei 47 %) werden die Endstufen 14 und 16 periodisch zwischen den beiden unkritischen Betriebszuständen umgeschaltet. Erfolgt das Umschalten mit einer entsprechend hohen Frequenz gegenüber einer Systemzeitkonstanten, ergibt sich der Mittelwert der beiden unkritischen Tastverhältnisse an den Motoren, ohne dass das Steuergerät 30 im kritischen Bereich arbeiten muss.

Um beispielsweise bei dem ersten Motor 10 ein Soll-Tastverhältnis von 50 % zu erreichen, kann der Motor 10 auch abwechselnd mit einem Tastverhältnis von 60 % und von 40 % angesteuert werden. Der Mittelwert der beiden Tastverhältnisse beträgt dann 50 %, wenn die Zeiträume für die Ansteuerung mit den verschiedenen Tastverhältnissen jeweils gleich sind.

Es kann bspw. ein unkritischer Bereich bei einem Tastverhältnis zwischen 0 und 47 % sowie zwischen 53 und 100 % gegeben sein. Das kritische Tastverhältnis beträgt danach zwischen mehr als 47 und weniger als 53 %. Soll das Schaltgerät 30 ein Ausgangstastverhältnis für beide Motoren von jeweils 48 % liefern, dann kann der Betrieb bspw. alternierend mit 43 % und 53 % erfolgen.

Bei einem Soll-Ausgangstastverhältnis für beide Motoren von jeweils 49 % kann der Betrieb bspw. alternierend mit Tastverhältnissen von 45 % und 53 % erfolgen. Bei einem Soll-Ausgangstastverhältnis für beide Motoren von jeweils 50 % kann der Betrieb bspw. alternierend mit Tastverhältnissen von 47 % und 53 % erfolgen.

Bei einem Soll-Ausgangstastverhältnis für beide Motoren von jeweils 51 % kann der Betrieb bspw. alternierend mit Tastverhältnissen von 47 % und 55 % erfolgen. Bei einem Soll-Ausgangstastverhältnis für beide Motoren von jeweils 52 % kann der Betrieb bspw. alternierend mit Tastverhältnissen von 47 % und 57 % erfolgen.

Die Periode für die zyklische Umschaltung zwischen dem jeweils niedrigeren und dem höheren Wert für das Tastverhältnis zwischen den beiden Motoren hängt von der Systemzeitkonstanten bzw. von den Motorzeitkonstanten ab. Typische Werte hierfür können bspw. zwischen 1 ms und 100 ms (Millisekunden) liegen. Diese Zeiträume sind im Vergleich zu einer typischen Periode eines pulsweitenmodulierten Signals von ca. 50 $\mu$s relativ lang, aber immer noch kurz genug, damit aufgrund der Trägheit des Systems das Hin- und Herschalten zwischen den beiden Zyklen als konstantes Ansteuersignal wahrgenommen wird. D.h., es wird keinerlei Drehzahlschwankung der Motoren 10, 12 wahrgenommen. Die Erzeugung der Signale sowie die Umschaltung zwischen den beiden Schaltzyklen wird durch das Schaltgerät 30 vorgenommen, das vorzugsweise einen entsprechend ausgestatteten Mikrorechner aufweist.

Die Ansteuertastverhältnisse lassen sich nach folgenden Formeln berechnen. Dabei steht $Z_1$ für den ersten und alle ungeraden Zyklen und $Z_2$ für den zweiten und alle geraden Zyklen. $Z_{High}$ bezeichnet die prozentuale Einschaltzeit bzw. die Anschaltdauer, und $Z_{Low}$ bezeichnet die prozentuale Ausschaltzeit bzw. die Ausschaltdauer im Zyklus. Dann berechnet sich für den ersten und alle ungeraden Zyklen der prozentuale High-Wert bzw. die Anschaltdauer der Ansteuer-FETs im Schaltgerät 30 zu

$$Z_{1\text{-}High} = S_{max\text{-}zul}\,[\%] - (A\,[\%] - x\,[\%])$$

und der prozentuale Low-Wert bzw. die Ausschaltdauer der Signale zu

$$Z_{1\text{-}Low} = 1 - Z_{1\text{-}High}.$$

Dabei stellt $S_{max\text{-}zul}$ einen prozentualen Wert für das größere zulässige Tastverhältnis dar. Der Parameter "A" steht für den prozentualen Mittelwert des nicht zulässigen Tastverhältnisses, während der Parameter "x" für eine Bereichsgröße um den Wert "A" in % steht, die nicht zulässig ist.

Für alle geraden Zyklen berechnet sich der prozentuale High-Wert bzw. die Anschaltdauer der Ansteuer-FETs im Schaltgerät 30 zu

$$Z_{2\text{-}High} = S_{min\text{-}zul}\,[\%] - (A\,[\%] - x\,[\%])$$

und der prozentuale Low-Wert bzw. die Ausschaltdauer der Signale zu

$$Z_{2\text{-}Low} = 1 - Z_{2\text{-}High}.$$

Dabei stellt $S_{min-zul}$ einen prozentualen Wert für das kleinere zulässige Tastverhältnis dar. Die Parameter "A" und "x" sind die selben wie oben.

Bei Werten für den prozentualen Mittelwert des nicht zulässigen Tastverhältnisses von

$$A \quad = \quad 50\,\%$$

und für die Bereichsgröße um den Wert A, die nicht zulässig ist von

$$x \quad = \quad 10\,\%$$

ergeben sich für die zulässigen Tastverhältnisse

$$S_{min-zul} \quad = \quad A - x = \quad 50\,\% - 10\,\% = \quad 40\,\%$$

und

$$S_{max-zul} \quad = \quad A + x = \quad 50\,\% + 10\,\% = \quad 60\,\%.$$

In der folgenden Tabelle sind die für dieses Beispiel ausgeschlossenen Tastverhältnisse aufgetragen. Für jedes ausgeschlossene Tastverhältnis sind die Ersatztastverhältnisse und der daraus resultierende Mittelwert berechnet. Soll bspw. ein Tastverhältnis von 48 % generiert werden, so erfolgt der Betrieb alternierend mit 58 % (High) und 42 % (Low) sowie mit 38 % (High) und 62 % (Low).

| Soll-Tastverhältnis | $Z_1$-High | $Z_1$-Low | $Z_2$-High | $Z_2$-Low | berechneter Mittelwert |
|---|---|---|---|---|---|
| 45 | 55 | 45 | 35 | 65 | 45 |
| 46 | 56 | 44 | 36 | 64 | 46 |
| 47 | 56 | 43 | 37 | 63 | 47 |
| 48 | 58 | 42 | 38 | 62 | 48 |
| 49 | 59 | 41 | 39 | 61 | 49 |
| 50 | 60 | 40 | 40 | 60 | 50 |
| 51 | 61 | 39 | 41 | 59 | 51 |
| 52 | 62 | 38 | 42 | 58 | 52 |
| 53 | 63 | 37 | 43 | 57 | 53 |
| 54 | 64 | 36 | 44 | 56 | 54 |
| 55 | 65 | 35 | 45 | 55 | 55 |

Selbstverständlich stimmen jeweils die berechneten Mittelwerte mit dem Soll-Tastverhältnis überein. Es versteht sich für den Fachmann von selbst, dass darüber hinaus auch andere Kombinationen als die oben angegebenen möglich und sinnvoll sein können.

**Patentansprüche**

**1.** Verfahren zum Betreiben von zwei Elektromotoren (10, 12), die mittels einer gemeinsamen Steuerschaltung (30) über jeweils eine Endstufe (14, 16) mit pulsweitenmodulierten Signalen (18, 20) beaufschlagt werden, wobei die beiden Signale (18, 20) in jeweiligem zeitlichen Versatz zueinander erzeugt werden, und beim Auftreten einer Schaltflanke (40) eines Signals (18 bzw. 20) für einen der Elektromotoren (10 bzw. 12) das jeweils andere Signal (20 bzw. 18) für den jeweils anderen Elektromotor (12 bzw. 10) beziehungsweise die jeweils anderen Signale für die anderen Elektromotoren entweder einen Low - oder einen High -Wert aufweist bzw. aufweisen, **dadurch gekennzeichnet, dass** bei einem Soll-Tastverhältnis von 50 % für beide pulsweitenmodulierten Signale (18, 20) beider Elektromotoren (10, 12) jeweils ein Tastverhältnis von weniger als 50 % für einen Elektromotor (10 bzw. 12) beziehungsweise von mehr als 50 % für den anderen Elektromotor (12 bzw. 10) eingestellt wird.

2. Verfahren nach Anspruch 1, **dadurch gekennzeichnet, dass** die zeitlichen Abweichungen vom Soll-Tastverhältnis mindestens einer zeitlichen Länge einer Schaltflanke (40) eines Signals (18, 20) entsprechen.

3. Verfahren nach einem der voranstehenden Ansprüche **dadurch gekennzeichnet, dass** beide Elektromotoren (10, 12) zyklisch alternierend mit den Signalen (18, 20) mit jeweils unterschiedlichen Tastverhältnissen beaufschlagt werden.

4. Verfahren nach Anspruch 3, **dadurch gekennzeichnet, dass** die zyklische Umschaltung nach jeweils einer vorgegebenen Zeit beziehungsweise nach einer vorgegebenen Impulszahl der pulsweitenmodulierten Signale (18, 20) erfolgt.

**Claims**

1. Method for operating two electric motors (10, 12) to which pulse width modulated signals (18, 20) are applied by means of a common control circuit (30) via in each case one output stage (14, 16), the two signals (18, 20) being generated in respective time offset to one another and on occurrence of a switching edge (40) of one signal (18 or 20, respectively) for one of the electric motors (10 or 12, respectively) a respective other signal (20 or 18, respectively) for the respective other electric motor (12 or 10, respectively), or the respective other signals for the other electric motors respectively having either a "Low" or a "High" value, **characterized in that** in the case of a nominal duty ratio of 50% for both pulse width modulated signals (18, 20) of the two electric motors (10, 12) in each case a duty ratio of less than 50% is set for one electric motor (10 or 12, respectively) or of more than 50%, respectively, for the other electric motor (12 or 10, respectively).

2. Method according to Claim 1, **characterized in that** the time deviations from the nominal duty ratio at least correspond to a temporal length of one switching edge (40) of one signal (18, 20).

3. Method according to one of the preceding claims, **characterized in that** the signals (18, 20) are applied cyclically alternatingly to both electric motors (10, 12) with in each case different duty ratios.

4. Method according to Claim 3, **characterized in that** the cyclic switchover occurs after in each a predetermined time or respectively after a predetermined number of pulses of the pulse-width-modulated signals (18, 20).

**Revendications**

1. Procédé pour faire fonctionner deux moteurs électriques (10, 12) qui sont sollicités par des signaux (18, 20) modulés en largeur d'impulsion au moyen d'un circuit de commande commun (30) par le biais d'un étage final respectif (14, 16), les deux signaux (18, 20) étant générés à chaque fois avec un décalage temporel l'un par rapport à l'autre, et lors de l'apparition d'un flanc de commutation (40) d'un signal (18, respectivement 20) pour l'un des moteurs électriques (10, respectivement 12), l'autre signal respectif (20, respectivement 18) pour l'autre moteur électrique respectif (12, respectivement 10), respectivement les autres signaux respectifs pour les autres moteurs électriques, présentant soit une valeur basse soit une valeur haute, **caractérisé en ce que** dans le cas d'un rapport cyclique de consigne de 50 % pour les deux signaux (18, 20) modulés en largeur d'impulsion des deux moteurs électriques (10, 12), à chaque fois un rapport cyclique inférieur à 50 % pour un moteur électrique (10, respectivement 12), respectivement supérieur à 50 % pour l'autre moteur électrique (12, respectivement 10) est ajusté.

2. Procédé selon la revendication 1, **caractérisé en ce que** les écarts temporels du rapport cyclique de consigne correspondent à au moins une longueur temporelle d'un flanc de commutation (40) d'un signal (18, 20).

3. Procédé selon l'une quelconque des revendications précédentes, **caractérisé en ce que** les deux moteurs électriques (10, 12) sont sollicités de manière cyclique en alternance avec les signaux (18, 20) avec des rapports cycliques respectivement différents.

4. Procédé selon la revendication 3, **caractérisé en ce que** la commutation cyclique s'effectue à chaque fois après un temps prédéfini, respectivement après un nombre d'impulsions prédéfini des signaux (18, 20) modulés en largeur d'impulsion.

Fig.1

Fig.2

Fig.3

Fig.4

**EP 1 656 731 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030094913 A1
- EP 0693822 A1
- JP 10014286 A